Europäisches Patentamt

European Patent Office

Office européen des brevets

(11) Numéro de publication: **0 362 249 B1**

(12) **FASCICULE DE BREVET EUROPEEN**

(45) Date de publication de fascicule du brevet: **07.07.93** (51) Int. Cl.⁵: **G01S 7/295**, G01S 7/06

(21) Numéro de dépôt: **88904561.3**

(22) Date de dépôt: **17.05.88**

(86) Numéro de dépôt internationale :
**PCT/FR88/00250**

(87) Numéro de publication internationale :
**WO 88/09514 (01.12.88 88/26)**

(54) **TRANSFORMATEUR NUMERIOUE D'IMAGES RADAR.**

(30) Priorité: **22.05.87 FR 8707206**

(43) Date de publication de la demande:
**11.04.90 Bulletin 90/15**

(45) Mention de la délivrance du brevet:
**07.07.93 Bulletin 93/27**

(84) Etats contractants désignés:
**DE GB IT NL**

(56) Documents cités:
EP-A- 0 068 852      EP-A- 0 192 562
GB-A- 1 057 656      US-A- 3 653 044
US-A- 4 136 325      US-A- 4 468 747
US-A- 4 471 449      US-A- 4 618 887

(73) Titulaire: **THOMSON-CSF**
**51, Esplanade du Général de Gaulle**
**F-92800 Puteaux(FR)**

(72) Inventeur: **GAULT, Dominique**
**119, rue de Versailles**
**F-92410 Ville-d'Avray(FR)**
Inventeur: **ANDRIEU, Jean-Pierre**
**26, rue du Petit-Musc**
**F-75004 Paris(FR)**
Inventeur: **HENRI, Jean-Claude**
**20, square du Pont-de-Sèvres**
**F-92100 Boulogne-Billancourt(FR)**

(74) Mandataire: **Benoit, Monique et al**
**THOMSON-CSF, SCPI, B.P. 329, 50, rue Jean-**
**Pierre Timbaud**
**F-92402 Courbevoie Cédex (FR)**

# Description

La présente invention concerne la visualisation d'informations radar à l'aide d'un transformateur numérique d'images ; elle a plus particulièrement pour objet un procédé d'affectation de récurrences radar à des radiales visualisables, ainsi que ses moyens de mise en oeuvre.

Lorsqu'on souhaite visualiser une image fournie en coordonnées polaires, telle qu'une image radar, sur un dispositif de visualisation fonctionnent en mode télévision, on utilise en général un dispositif appelé transformateur numérique d'images, ou TDI, qui a pour rôle essentiel de transformer l'image en coordonnées polaires en une image en coordonnées cartésiennes et de la mémoriser sous forme numérique de façon à assurer l'adaptation entre le rythme de la fourniture des images et le rythme du renouvellement de l'image télévision.

Un TDI comporte classiquement : un circuit d'interface radar, qui reçoit les signaux de vidéo en provenance du radar et assure leur numérisation ; un sous-ensemble de conversion de coordonnées ; une mémoire, appelée mémoire image, dans laquelle l'information radar est stockée sous forme numérique dans le format sous lequel elle sera affichée. En relation avec la mémoire image le TDI comporte encore des circuits de rémanence artificielle qui ont pour rôle de créer, pour les informations de la mémoire image pour lesquelles il n'existe pas de modifications dues au vieillissement un effet de rémanence comparable à celui qui est produit sur un tube rémanent où la brillance d'un point commence à décroître dès qu'il est inscrit. Dans un tel système, le processus d'écriture en mémoire est le suivant.

Le signal vidéo est constitué par les réponses (échos) à une impulsion émise par le radar ; il est fourni à une fréquence qui est la fréquence de répétition de l'émission de ces impulsions, appelée PRF (pour "Pulse Repetition Frequency" en anglais). Il est à noter que la fréquence PRF est déterminée par la portée du radar. Les signaux vidéos fournis à la fréquence PRF sont appelés ci-après "récurrence".

Le sous-ensemble de conversion de coordonnées reçoit, pour effectuer sa conversion, des "signaux de rotation" qui ont pour rôle d'indiquer à tout moment la position angulaire du faisceau du radar, celui-ci tournant de façon régulière par rapport à une direction de référence en général le Nord ; les signaux de rotation sont constitués d'une part par un signal Nord (N), qui est une impulsion, ou top, à chaque passage du faisceau au Nord et, d'autre part, par une impulsion, ou top, d'incrément d'angle ($\epsilon$) indiquant que le faisceau a tourné d'1/n$^e$ de tour par rapport à l'incrément précédent, si n incréments correspondent à 360°.

Les tops d'incréments d'angle $\epsilon$ sont fournis en général par le codeur d'antenne de façon asynchrone par rapport aux récurrences. On appelle $\theta$ l'angle résultant, à un instant donné, que fait le faisceau du radar avec la direction de référence (Nord). L'information vidéo affectée à chacune des n directions $\theta$ du faisceau est appelée ci-après "radiale".

Lorsque le système radar fournit n incréments d'angle, on souhaite généralement visualiser n radiales. Il est alors nécessaire d'affecter les différentes récurrences aux différentes radiales. Les différents points de chaque radiale ainsi constituée sont ensuite inscrits en mémoire image aux adresses calculées en coordonnées cartésiennes.

Toutefois, la périodicité des incréments d'angle $\epsilon$ étant donnée par l'antenne et la fréquence PRF étant déterminée par ailleurs par la portée du radar, il apparaît que dans certains cas ces valeurs peuvent être telles qu'on se trouve dans une des configurations suivantes :

- soit la fréquence des incréments $\epsilon$ est trop faible par rapport à la fréquence PRF : parmi les récurrences reçues à la fréquence PRF, il y a alors des récurrences qui ne correspondent à aucune valeur de $\theta$ ; soit elles ne sont alors pas inscrites en mémoire et sont perdues, soit elles sont préalablement regroupés, d'une façon qui peut n'être pas constante d'une radiale à l'autre ou d'un tour d'antenne à l'autre, et inscrites en mémoire ; il en résulte une erreur de positionnement des échos ; en outre, cette erreur peut varier d'un tour d'antenne à l'autre ;

- soit la fréquence des increments $\epsilon$ est trop élevée par rapport à la fréquence PRF et il y a des valeurs de l'angle $\theta$ pour lesquels on ne dispose pas d'information radar (récurrences) correspondante : il n'y a alors pas d'inscription mémoire faute d'information ; l'inconvénient en est notamment une irrégularité de l'image par manque d'une radiale de temps en temps, ainsi que la perturbation du fonctionnement de la rémanence.

Pour éviter ce dernier inconvénient, on est conduit en pratique à modifier la fréquence PRF, dans un sens conduisant à limiter la portée du radar.

Une autre solution est décrite dans la demande de brevet européen publiée sous le n° 0.192.562 au nom de THOMSON-CSF, selon laquelle on transforme la périodicité des incréments $\epsilon$ en un signal $\epsilon'$ en fonction de la fréquence PRF du radar, afin d'éviter toute perte d'information; la conversion de coordonnées et l'affectation des récurrences se fait alors selon la valeur transformée $\epsilon'$. Ce procédé revient à limiter le nombre de radiales effectivement visualisées par rapport au nombre de valeurs

de l'angle $\theta$ données par l'antenne, c'est-à-dire au nombre de radiales qu'il pourrait être possible de visualiser, d'où une limitation dans la qualité de l'image visualisée.

La présente invention permet d'éviter ces derniers défauts et limitations en permettant de visualiser autant de radiales que l'antenne fournit de valeurs de l'angle $\theta$. Elle permet d'affecter les récurrences incidentes aux radiales visualisables quel que soit le type du radar, c'est-à-dire quel que soit le rapport entre la fréquence des incréments $\epsilon$ et la fréquence PRF, en réalisant un découplage de l'information reçue (récurrences à la fréquence PRF) avec l'information destinée à la visualisation (radiales), permettant ainsi une optimisation de l'utilisation du TDI.

Plus précisément, le TDI mettant en oeuvre le procédé selon l'invention comporte un sous-ensemble recevant le signal $\epsilon$ et un signal de synchronisation radar $SY_R$ constitué d'impulsions, ou tops à la fréquence PRF et assurant une fonction de regroupement de la façon suivante :
- mémorisation des récurrences incidentes au rythme de leur arrivée (PRF) dans l'une des mémoires d'un groupe comportant m mémoires, m étant au moins égal à 3, l'identification de la mémoire en écriture étant changée sur le premier top $SY_R$ suivant la réception d'un top $\epsilon$ modulo m ;
- le cas échéant, regroupement d une récurrence incidente avec une récurrence déjà mémorisée ;
- lecture d'au moins une mémoire à la réception de chaque top $\epsilon$, l'identification de la mémoire à lire étant obtenue à partir de celle de la mémoire en écriture à ce moment.

D'autres objects, particularités et résultats de l'invention ressortiront de la description suivante, donnée à titre d'exemple non limitatif et illustrée par les dessins annexés, qui représentent :
- les figures 1 et 2, des schémas explicatifs des processus de quantification et de regroupement de l'information radar incidente ;
- les figures 3a et 3b, les chronogrammes de la lecture et de l'écriture des différentes récurrences et radiales dans le procédé selon l'invention ;
- la figure 4, un organigramme du procédé selon l'invention ;
- la figure 5, un mode de réalisation du dispositif de mise en oeuvre du procédé selon l'invention ;
- la figure 6, le schéma synoptique d'un TDI mettant en oeuvre le procédé selon l'invention.

Sur ces différentes figures les mêmes références se rapportent aux mêmes éléments.

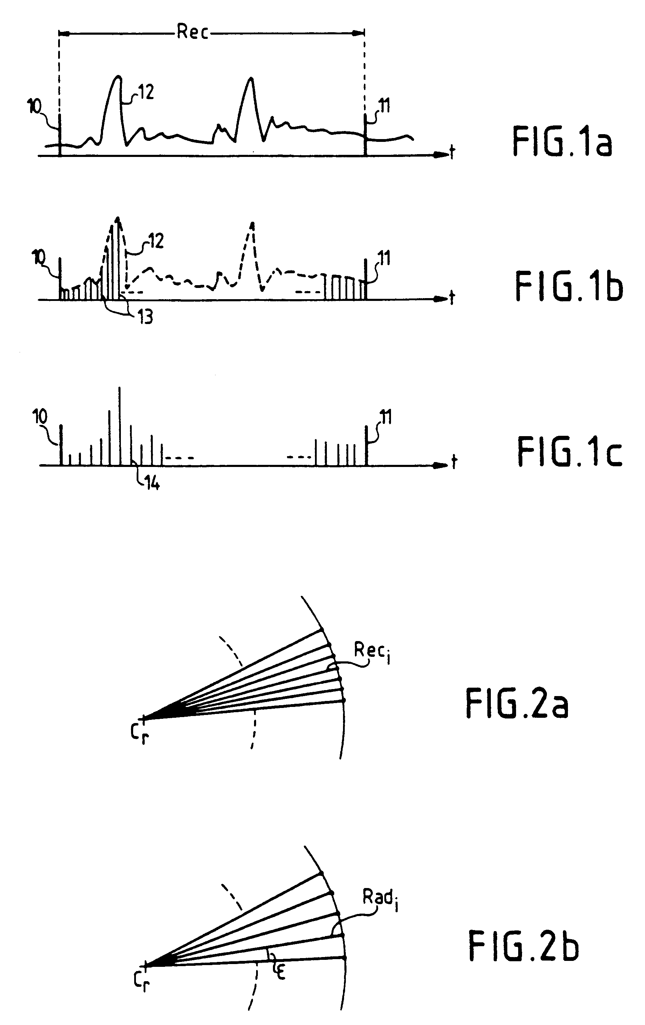

Les figures 1a, 1b et 1c illustrent le processus de quantification en distance du signal vidéo radar incident.

La figure 1a illustre, en fonction du temps, le signal analogique vidéo repéré 12, tel qu'il est fourni par le récepteur radar.

On a également porté sur cette figure les tops de synchronisation radar notés $SY_R$, émis en synchronisme avec l'émission de l'impulsion radar dont le signal vidéo 12 constitue la réponse. On a désigné par Rec une récurrence, c'est-à-dire le signal vidéo radar entre deux tops $SY_R$, repérés 10 et 11.

L'interface d'entrée du TDI a pour fonction de numériser ce signal vidéo analogique : c'est ce qui est représenté sur la figure 1b où on retrouve la même récurrence Rec et où on a figuré un ensemble d'échantillons, repérés 13, de fréquence $H_e$ et dont l'enveloppe est le signal vidéo 12. Chacun des échantillons est exprimé sous forme numérique sur b bits.

Ainsi qu'il est connu la fréquence d'échantillonnage est fonction de la largeur d'impulsion du radar. Le nombre total d'échantillons nécessaires entre deux tops $SY_R$ peut être important et dépasser les possibilités de traitement du TDI ; on procède alors à un regroupement de ces échantillons en ce qu'on appelle ci-après des "quanta", dont la fréquence, notée $H_Q$, est inférieure ou égale à la fréquence d'échantillonnage $H_e$ et est donc fonction de la capacité maximale de traitement du TDI.

La succession des quanta, repérés 14, est représentée sur la figure 1c entre les tops de synchronisation 10 et 11.

La fonction appliquée à deux (ou davantage) échantillons pour les regrouper en un quantum est par exemple une fonction maximum étant entendu que d'autres fonctions sont possibles, comme la fonction moyenne.

Les figures 2, a et b, illustrent la notion de radiale.

La figure 2a est un schéma spatial en coordonnées polaires d'une succession de récurrences $Rec_i$, à partir du centre du radar, noté $C_R$.

On rappelle que chaque récurrence correspond temporellement à une impulsion radar, ou encore à un top de synchronisation $SY_R$.

Ainsi qu'il a été indiqué plus haut, la seule information angulaire disponible permettant de placer sur un écran de contrôle la vidéo représentée par les quanta est constitués par les tops $\epsilon$ : il est alors nécessaire d'affecter à chaque récurrence une valeur d'angle obtenue par comptage des tops $\epsilon$, depuis une origine temporelle constituée par le top Nord.

On a représenté sur la figure 2b le cas où, la fréquence PRF étant supérieure à la fréquence $H_\epsilon$ des tops $\epsilon$, il faut procéder à un regroupement des récurrences affectées à une même valeur d'angle pour former une radiale, repérée $Rad_i$, chacune des radiales étant séparée par l'angle $\epsilon$. Il est à noter qu'on désigne dans la présente description par $\epsilon$ à la fois l'impulsion, indiquant un incrément d'angle, et la valeur angulaire de la fraction 360°/n.

Chaque quantum de cette radiale résultante est donc spatialement défini par sa distance $\rho$ au centre radar $C_R$ (qui est en fait donné par le numéro du quantum compté depuis l'origine temporelle que constitue le top de synchronisation) et l'angle $\theta$ d'une radiale par rapport au Nord (qui est obtenu par comptage des tops $\epsilon$ depuis l'origine temporelle que constitue le top Nord).

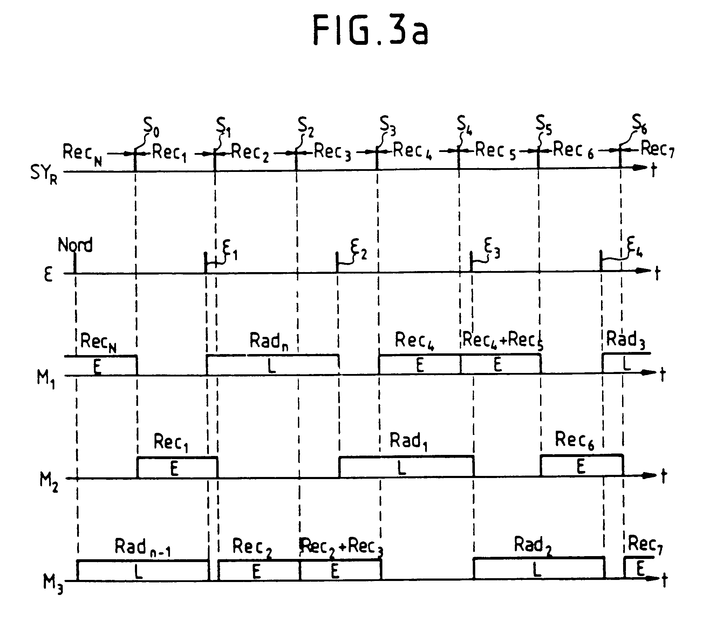

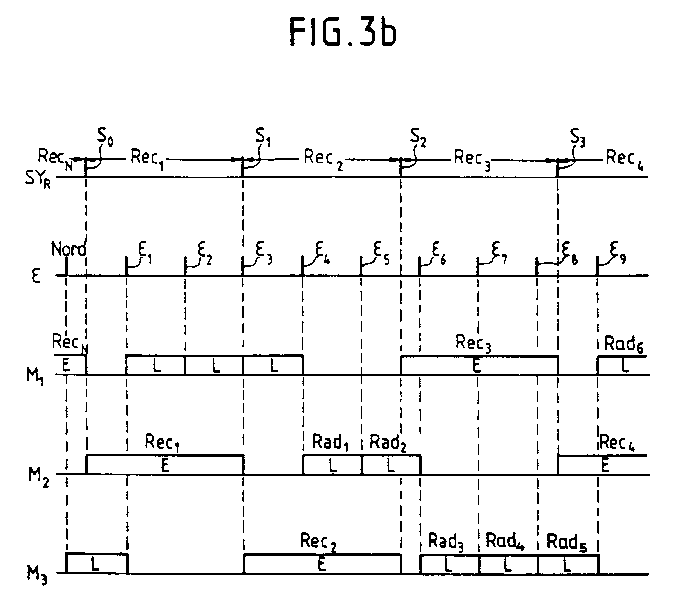

Les figures 3, a et b, illustrent le procédé d'affectation des récurrences incidentes à un nombre de radiales visualisables défini par le radar, ce procédé étant réalisé à l'aide d'un ensemble de $\overline{m}$ mémoires dans lesquelles les récurrences incidentes sont écrites et lues selon un séquencement particulier. Dans l'exemple représenté sur la figure 3, le nombre m de mémoires est égal à 3.

La figure $\overline{3}a$ représente le cas où la fréquence PRF est supérieure à la fréquence des tops $\epsilon$.

Il s'agit d'un chronogramme illustrant le séquencement des tops de synchronisation $SY_R$ (à la fréquence PRF), des signaux $\epsilon$ et des phases de lecture et d'écriture dans chacune des trois mémoires, notées $M_1$, $M_2$ et $M_3$.

Sur la première ligne, représentant les tops de synchronisation $SY_R$, notés $S_0$ à $S_6$, on a indiqué également la succession des récurrences : la dernière récurrence du tour d'antenne précédent, noté $Rec_N$, puis les sept premières récurrences d'un tour, indicées de 1 à 7.

Sur la deuxième ligne du diagramme, on a représenté les tops $\epsilon$, le premier indiquant le passage du faisceau radar au Nord. La fréquence des tops $\epsilon$ étant inférieure dans cette hypothèse à la fréquence PRF, on a seulement représenté quatre tops $\epsilon$, repérés $\epsilon_1$, $\epsilon_2$, $\epsilon_3$ et $\epsilon_4$, fournis pendant les six premières récurrences.

Chacune des radiales incidentes est inscrite au fur et à mesure de son arrivée (à la fréquence PRF) dans l'une des mémoires $M_1$-$M_3$, en commençant par exemple par la mémoire $M_1$ dans laquelle est inscrite la dernière récurrence du tour d'antenne, notée $Rec_N$. Le numéro de mémoire en écriture s'incrémente d'une unité sur le premier top de synchronisation $SY_R$ qui suit la réception d'un top $\epsilon$. En pratique, le top de synchronisation $SY_R$ séparant les récurrences N et 1 ($S_0$) étant reçu juste après un top $\epsilon$, en l'occurrence le signal Nord, le numéro de la mémoire en écriture s'incrémente d'une unité et la première récurrence $Rec_1$ est donc inscrite dans la mémoire de $M_2$. De la même manière, dans l'exemple représenté, le top $\epsilon_1$ intervenant juste avant le top $S_1$, la récurrence

suivante, $Rec_2$, est inscrite dans la mémoire suivante c'est-à-dire $M_3$. Toujours dans l'exemple représenté, la périodicité des tops $\epsilon$ est telle que le top $\epsilon_2$ n'intervient pas avant mais après le top $S_2$. En conséquence, la troisième récurrence $Rec_3$ est affectée à la même mémoire que la récurrence $Rec_2$.

En outre, selon l'invention, l'information correspondant à la récurrence $Rec_3$ ne vient pas écraser le contenu précédent de la mémoire $M_3$, à savoir la récurrence $Rec_2$, mais se combine à celle-ci selon une fonction de regroupement, par exemple une fonction maximum ; le contenu de la mémoire $M_3$ est alors, pour chaque quantum, la valeur maximale des quanta correspondants des récurrences $Rec_2$ et $Rec_3$.

Le top $\epsilon_2$ intervenant avant la récurrence $Rec_4$, celle-ci est inscrite dans la mémoire d'après, c'est-à-dire la mémoire $M_1$ (modulo 3), etc ...

En ce qui concerne la lecture, on procède à la lecture de l'une des mémoires à chaque fois qu'est reçu un top $\epsilon$ pour constituer une radiale ; le numéro de la mémoire à lire est obtenu en retranchant 1 (modulo 3) au numéro de la mémoire qui est en écriture à l'instant où le top $\epsilon$ est reçu. Lors de la réception du top Nord la mémoire en écriture dans le cas de la figure 3a est la mémoire $M_1$ : la mémoire en lecture est donc la mémoire $M_3$.

Au top $\epsilon_1$, qui intervient pendant que la mémoire $M_2$ est en écriture, on passe à la lecture de la mémoire $M_1$.

Au top $\epsilon_2$, la mémoire en écriture étant la mémoire $M_3$, on passe à la lecture de la mémoire $M_2$, qui formera alors la première radiale du tour, notée $Rad_1$,etc...

La figure 3b est analogue à la figure 3a à ceci près que dans cet exemple, la fréquence des tops $\epsilon$ est supérieure à la fréquence PRF.

On a donc représenté quatre récurrences ($Rec_1$, $Rec_2$, $Rec_3$, $Rec_4$) et neuf tops $\epsilon$ ($\epsilon_1...\epsilon_9$). Comme précédemment, les récurrences sont inscrites en mémoire au fur et à mesure de leur arrivée, le numéro de la mémoire étant incrémenté d'une unité pour chaque top de synchronisation qui suit immédiatement un top $\epsilon$.

En lecture, on procède également comme précédemment. La fréquence des tops $\epsilon$ étant supérieure à celle des tops de synchronisation ($SY_R$), on voit qu'une même mémoire peut être lue plusieurs fois pour constituer des radiales différentes, c'est-à-dire séparées par un incrément d'angle $\epsilon$, mais dont le contenu vidéo sera identique : c'est le cas par exemple sur le schéma de la première récurrence $Rec_1$, inscrite en mémoire $M_2$ et qui sera lue deux fois, sur les tops $\epsilon_4$ et $\epsilon_5$, pour constituer les deux premières radiales $Rad_1$, et $Rad_2$.

On a représenté en outre dur la figure 3b, le cas particulier où un top $\epsilon$ ($\epsilon_3$) et un top $SY_R$ ($S_1$) sont simultanés. Une priorité doit être alors définie. On choisit par exemple de considérer le top $\epsilon$ comme antérieur au top $SY_R$. En conséquence à ce moment la lecture se poursuit sur la mémoire $M_1$.

Il apparaît que le procédé selon l'invention s'applique quel que soit le rapport PRF -fréquence de tops $\epsilon$ : supérieur, inférieur ou même égal à 1, et cela même si ce rapport varie. Cela constitue un avantage, notamment dans le cas ou ce rapport étant voisin de 1, il peut devenir supérieur ou inférieur à 1 dans le cours du fonctionnement normal du radar, l'antenne de celui-ci pouvant avoir un mouvement qui n'est pas parfaitement régulier.

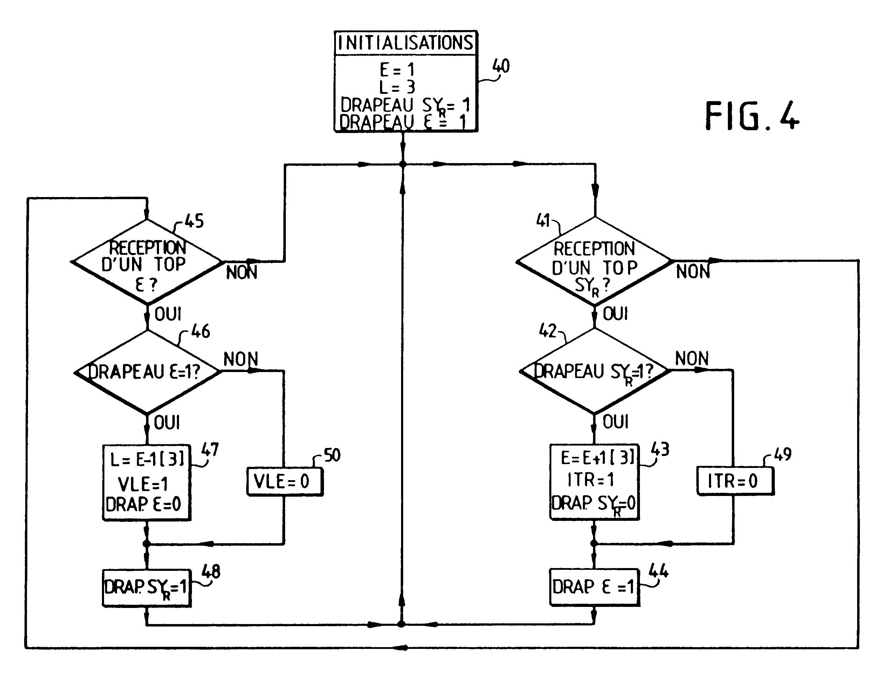

La figure 4 représente l'organigramme d'un mode de génération des identifications (numéros) de mémoires en écriture et en lecture, ainsi que de certains signaux de validation, dans le procédé selon l'invention.

L'organigramme commence par un certain nombre d'initialisations : étape 40 sur la figure 4. L'adresse de la mémoire en écriture est appelée E elle est initialisée par exemple à 1. L'adresse de la mémoire en lecture est appelée L et elle est initialisée à 3 si le groupe de mémoires comporte m = 3 mémoires. On procède également à l'initialisation de deux bits indicateurs, ou drapeaux, ultérieurement utilisés, un drapeau $SY_R$ et un drapeau $\epsilon$, qu'on initialise tous deux à 1.

L'étape suivante, 41, est un test sur la réception d'un top de synchronisation $SY_R$. Dans une étape suivante, repérée 42, on teste la valeur du drapeau $SY_R$. Si celle-ci est égale à 1 comme c'est le cas après l'initialisation, on passe à l'étape suivante (43) qui consiste à incrémenter la valeur de la mémoire en écriture d'une unité (modulo 3), c'est-à-dire que la mémoire qui doit recevoir la récurrence est la mémoire $M_2$. Dans le même temps, on positionne un bit appelé ITR à la valeur 1, dont on explicite l'utilisation plus loin, et on modifie la valeur du drapeau $SY_R$, qui devient égale à 0. Dans une étape ultérieure 44, on positionne le drapeau $\epsilon$ à la valeur 1 pour le cas où il ne le serait pas, on inscrit la récurrence incidente dans la mémoire $M_2$ et on reboucle sur le test 41 de réception d'un top $SY_R$.

En se reportant au diagramme de la figure 3a, on suppose maintenant qu'on se situe à l'instant de réception du top $\epsilon_1$ ; la réponse au test 41 est donc négative et se déroule alors un test (45) sur la réception d'un top $\epsilon$. Dans l'hypothèse présente, la réponse est oui et on teste (étape 46) la valeur du drapeau $\epsilon$. Si, comme c'est le cas ici, il est égal à 1, on positionne un bit appelé VLE à la valeur 1 (étape 47), on change la valeur du drapeau $\epsilon$ à la valeur 0 et le numéro de mémoire en lecture (L) devient égal au numéro de mémoire en écriture (E) moins une unité (modulo 3). Dans une étape suivante, repérée 48, le drapeau $SY_R$ est positionné à 1, on lit la mémoire pour constituer une radiale et on reboucle vers le test de réception d'un top de synchronisation. De la même manière, si on répond négativement au test (45) d'un top $\epsilon$, on reboucle vers le test (41) d'un top $SY_R$.

Le bit ITR est utilisé lors de l'inscription d'une récurrence dans une mémoire M. Dans le cas où il s'agit d'une récurrence suivant immédiatement un top $\epsilon$, par exemple $Rec_2$ en mémoire $M_3$ (figure 3a), la récurrence doit être inscrite en écrasant le contenu initial de la mémoire $M_3$. Au contraire, lors de l'inscription dans la même mémoire ($M_3$) d'une deuxième récurrence ($Rec_3$), le contenu ($Rec_2$) de la mémoire ne doit pas être écrasé mais regroupé avec la récurrence incidente. Le bit ITR sert à commander les deux fonctionnements correspondant aux deux cas : par exemple, à inhiber la fonction de regroupement avec ITR = 1 dans le premier cas et ITR = 0 dans le deuxième cas. Le drapeau $SY_R$ sert à distinguer la première récurrence suivant un top $\epsilon$.

Le bit VLE est utilisé lorsqu'on souhaite tracer une radiale dont la vidéo soit nulle. En effet, dans certains cas d'utilisation, on peut souhaiter que l'image visualisée par l'intermédiaire du TDI ressemble davantage à une image du type de celles qui sont obtenues sur un écran du type PPI (pour Plan Position Indicator en anglais). Il est alors préférable de ne pas procéder à la recopie d'une même récurrence pour constituer plusieurs radiales, comme illustré figure 3b. On utilise alors le bit VLE de façon analogue au bit ITR, pour identifier la première radiale qui suit un top $SY_R$, qui seule sera visualisée, les suivantes étant forcées à la valeur nulle.

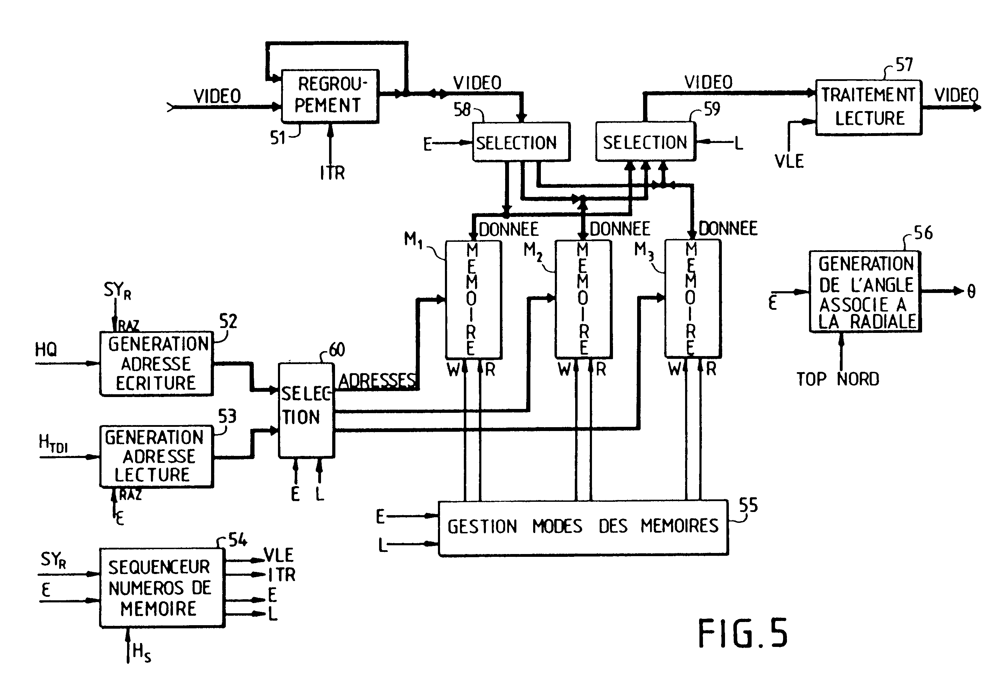

La figure 5 représente un mode de réalisation des moyens de mise en oeuvre du procédé selon l'invention.

Le dispositif de la figure 5 comporte donc par exemple trois mémoires $M_1$, $M_2$ et $M_3$, précédées sur le chemin des récurrences incidentes par un circuit de regroupement 51, qui reçoit ces dernières sous forme numérique. Le dispositif comporte encore : un générateur d'adresses d'écriture 52 ; un générateur d'adresses de lecture 53 ; un séquenceur 54 fournissant les numéros de mémoire selon le fonctionnement décrit précédemment figure 4 ; un circuit 55 de gestion des modes de fonctionnement des mémoires $M_1$-$M_3$ ; un circuit 56 de génération de l'angle $\theta$ à partir des tops $\epsilon$, et le cas échéant un dispositif de traitement de lecture 57. Ce dispositif comprend en outre des dispositifs de sélection 58, 59 et 60.

Le dispositif fonctionne de la façon suivante.

Pour l'écriture d'une récurrence en mémoire :

Une récurrence incidente est écrite dans l'une des mémoires, par exemple $M_1$, après un éventuel regroupement (circuit 51) avec le contenu précédent de la mémoire $M_1$. Le regroupement est commandé par le bit ITR fourni par le séquenceur 54. La mémoire $M_1$ (comme les mémoires $M_2$ et $M_3$) est reliée au circuit de regroupement 51 par le circuit de sélection 58, lui-même relié par un bus au circuit 51. Le circuit de sélection 58 est relié par trois bus aux trois mémoires $M_1$-$M_3$ et assure l'aiguillage des récurrences incidentes en fonction du numéro (E) de la mémoire où l'écriture doit être faite ; le numéro E est fourni au circuit de sélection 58 par le séquenceur 54.

L'adresse à laquelle doit être écrite l'information fournie à la mémoire $M_1$ est donnée par le générateur d'adresse d'écriture 52, qui est constitué par exemple par un compteur, recevant le rythme $H_Q$ des quanta formant la récurrence. Le générateur 52 est remis à zéro par les tops $SY_R$, c'est-à-dire à chaque récurrence. Cette adresse est transmise à la mémoire $M_1$ via le sélecteur 60 qui, relié aux trois mémoires $M_1$-$M_3$, reçoit le numéro (E) de la mémoire en écriture et aiguille l'adresse en conséquence, de façon analogue au sélecteur 58.

Enfin, la commande du mode écriture (W) de la mémoire $M_1$ est faite par le dispositif de chronométrie 55 assurant la gestion des modes des trois mémoires $M_1$-$M_3$, sur réception des numéros de mémoire E et L.

Pour la lecture d'une mémoire :

Une des mémoires, par exemple $M_3$, est lue à réception d'un top $\epsilon$ pour constituer une radiale. Celle-ci est éventuellement forcée à une valeur nulle par le circuit 57 sur commande du bit VLE. La mémoire $M_3$, comme les mémoires $M_1$ et $M_2$, est reliée à un bus de sortie de la vidéo, vers le circuit 57, par l'intermédiaire du circuit de sélection 59. Ce dernier est, de façon analogue au sélecteur 58 mais pour la lecture, relié à chacune des mémoires $M_1$-$M_3$ et réalise un aiguillage sous la commande du numéro (L) de la mémoire en lecture, fourni par le séquenceur 54.

De façon analogue à ce qui a été décrit pour la phase écriture, le générateur d'adresse de lecture 53 fournit les adresses à la mémoire $M_3$ au rythme $H_{TDI}$ auquel les quanta doivent être fournis au traitement TDI aval ; le générateur 53 est remis à zéro par chaque top $\epsilon$; l'adresse qu'il fournit est aiguillée par le sélecteur 60. Le mode lecture (R) est commandé à la mémoire $M_3$ par le circuit de chronométrie 55.

Il est à noter que le séquenceur 54, du fait de l'asynchronisme des différents signaux, doit fonctionner à une fréquence $H_S$ qui doit être le plus petit commun multiple des horloges $H_Q$, $H_\epsilon$ et $H_{TDI}$.

Enfin, pour être complet, le dispositif de la figure 5 comporte encore le circuit 56 de génération de l'angle $\theta$ associé à la radiale fournie, qui est un compteur recevant les tops $\epsilon$ et remis à zéro par le top Nord. Le circuit 56 peut assurer en outre une correction du décalage temporel qu'on observe par exemple sur la figure 3a, où la radiale ($Rad_1$) correspondant à la première récurrence ($Rec_1$) inscrite après le top Nord sera lue après plusieurs top $\epsilon$ (au top $\epsilon_2$ dans cet exemple).

Le procédé, décrit ci-dessus, d'affectation des récurrences radar à des radiales visualisables, peut être utilisé pour réaliser une fonction d'homogénéisation par remplissage de l'image visualisée.

On rappelle que, dans un TDI, le processus de conversion et de visualisation est quantifié et il arrive que cela donne un aspect "mité" à l'image. Il est donc souhaitable d'homogénéiser l'image à ce niveau en "remplissant" les trous, c'est-à-dire en leur affectant une luminosité fonction de l'environnement. Ce processus de correction de défauts est connu sous le nom de "pixel filling" dans la littérature anglo-saxonne.

Dans le cadre d'un TDI, une solution connue consiste à attribuer aux pixels non adressés par la conversion, donc sombres, une valeur de luminosité qui est fonction de celle des pixels adjacents, par exemple celle des huit pixels qui entourent le pixel considéré. Cette solution se heurte vite à des limites, notamment liées à la complexité et au coût, lorsque les vitesses de traitement doivent être grandes comme c'est souvent le cas pour un radar.

Une autre solution est décrite dans la demande de brevet français n° 86 00321, qui consiste à réaliser ce remplissage non plus au niveau des pixels de la mémoire image, mais au niveau du signal reçu en coordonnées polaires (module $\rho$, angle polaire $\theta$). Le procédé consiste alors à créer des radiales fictives entre les radiales réelles et à leur affecter à chacune un signal vidéo fonction du signal vidéo des radiales réelles voisines ; plus précisément, il est fonction de la valeur des signaux vidéos voisins qui sont situés à la même valeur du module $\rho$.

Lorsque l'affectation des récurrences aux radiales est effectuée comme décrit précédemment, il est possible de réaliser en outre la fonction d'homogénéisation en ajoutant au dispositif une quatrième mémoire M, afin de disposer de deux mémoires simultanément en mode lecture au lieu d'une seule. De la sorte, il est possible de créer une radiale fictive supplémentaire à partir des deux radiales lues simultanément.

Par rapport au déroulement du procédé décrit plus haut, la détermination du numéro de mémoire en écriture reste le même, mais modulo 4. La détermination des numéros (L$_1$, L$_2$) des deux mémoires en lecture devient :

L$_1$ = E - 1 (modulo 4)
L$_2$ = E - 2 (modulo 4)

Ceci permet de procéder à un remplissage de degré 1, c'est-à-dire correspondant à la création d'une radiale fictive entre deux radiales réelles.

Il est également possible de réaliser un remplissage de degré supérieur (P), c'est-à-dire correspondant à la création de plusieurs (P) radiales fictives entre deux radiales réelles. Les radiales fictives peuvent alors être émises en parallèle ou en série. Dans le cas où elles sont émises en série, l'émission d'un quantum réel s'accompagne alors simplement de l'émission de P quanta caractérisés par un même module $\rho$ , mais appartenant aux P radiales fictives de remplissage.

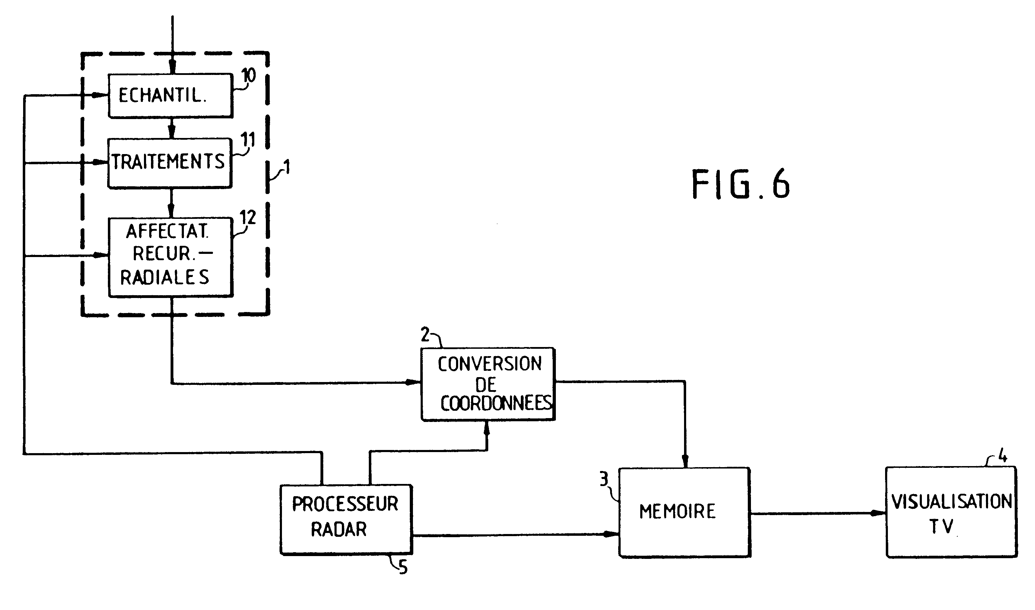

La figure 6 représente le schéma synoptique d'un TDI mettant en oeuvre le procédé selon l'invention.

Un TDI peut être décomposé en quelques sous-ensembles :

- un sous-ensemble 1 formant interface d'entrée et recevant les signaux fournis par le récepteur radar ;
- un sous-ensemble 2, assurant la conversion des coordonnées polaires en coordonnées cartésiennes ;
- un sous-ensemble 3 de mémoire et de rémanence, dans lequel l'information radar est enregistrée dans le format sous lequel elle sera visualisée en mode télévision, par un dispositif 4.

L'interface 1 a principalement pour fonction l'échantillonnage du signal vidéo radar et sa numérisation (circuit 10) éventuellement certains traitements succincts sur ce signal vidéo (circuit 11), ainsi que la mémorisation de cette information et l'affectation des récurrences aux radiales visualisables : c'est un circuit 12, constitué par exemple comme illustré sur la figure 5. Les radiales ainsi constituées et mémorisées sont fournies à l'ensemble mémoire 3 par l'intermédiaire du sous-ensemble 2 de conversion de coordonnées, qui permet le calcul de l'adresse en mémoire de chacun des points des radiales.

Ces différents sous-ensembles sont commandés et initialisés par un processeur 5.

## Revendications

1. Procédé d'affectation des récurrences reçues, correspondant aux signaux vidéo reçus en réponse aux impulsions émises par un radar, à des radiales visualisables, les récurrences étant fournies à une première fréquence qui est la fréquence de répétition (PRF) du radar et accompagnées d'un premier signal de synchronisation (SY$_R$) constitué par une première suite de tops à la première fréquence, et les radiales étant fournies à une deuxième fréquence en synchronisme d'un deuxième signal de synchronisation ($\epsilon$) constitué par une deuxième suite de tops à la deuxième fréquence ;
   le procédé étant caractérisé par le fait qu'il comporte les étapes suivantes :
   - mémorisation des récurrences au rythme de leur arrivée par écriture dans l'une des mémoires d'un groupe de m mémoires, avec m ≥ 3, l'identification de la mémoire en écriture étant changée à la réception du premier top (SY$_R$) de la première suite suivant un top ($\epsilon$) de la deuxième suite ;
   - regroupement d'une récurrence reçue avec la récurrence reçue précédemment et déjà mémorisée, dans le cas où ladite identification de mémoire n'a pas changé ;
   - lecture d'au moins une mémoire dudit groupe pour constituer une radiale, à la réception de chaque top ($\epsilon$) de la deuxième suite, l'identification de la mémoire en lecture étant obtenue à partir de celle de la mémoire en écriture au même moment.

2. Procédé selon la revendication 1, caractérisé par le fait que la deuxième fréquence ($\epsilon$) est fournie par les signaux d'incrément d'angle de rotation de l'antenne radar.

3. Procédé selon l'une des revendications précédentes, caractérisé par le fait qu'une récurrence est constituée d'une suite d'informations numériques appelées quanta, que ledit regroupement consiste à comparer les quanta de même rang des deux récurrences et à mémoriser le quantum dont la valeur est la plus élevée.

4. Procédé selon l'une des revendications précédentes, caractérisé par le fait que les mémoires sont numérotées de 1 à m, que l'identification de la mémoire en écriture est constituée par son numéro et que ce numéro est incrémenté d'une unité à la réception de chaque top (SY$_R$) de la première suite suivant un top ($\epsilon$) de la deuxième suite, modulo m.

**5.** Procédé selon la revendication 4, caractérisé par le fait que l'identification de la mémoire en lecture est constituée par son numéro et que ce numéro est obtenu en retranchant une unité au numéro de la mémoire en écriture au même moment, modulo m.

**6.** Procédé selon l'une des revendications précédentes, caractérisé par le fait que le groupe de mémoires comporte trois mémoires.

**7.** Procédé selon la revendication 4, caractérisé par le fait que le groupe de mémoires comporte quatre mémoires, deux d'entre elles étant simultanément en lecture, leur idéntification étant constituée par leur numéro, ceux-ci étant obtenus en retranchant respectivement une et deux unités au numéro de la mémoire en écriture à ce moment, modulo 4, les deux radiales ainsi obtenues permettant de former une radiale fictive de remplissage.

**8.** Transformateur numérique d'images, recevant des récurrences radars et fournissant des radiales visualisables en mode télévision, comportant :
- des moyens d'interface, recevant les récurrences radar, exprimées en coordonnées polaires ;
- des moyens de conversion des coordonnées polaires en coordonnées cartésiennes ;
- des moyens de mémoire et de rémanence ;

le transformateur étant caractérisé par le fait que les moyens d'interface comportent, pour la mise en oeuvre du procédé selon l'une des revendications précédentes :
- un groupe de m mémoires ($M_1$, $M_2$, $M_3$), avec m ≥ 3, recevant les récurrences ;
- un générateur (52) d'adresse d'écriture dans les mémoires ;
- un générateur (53) d'adresses de lecture dans les mémoires ;
- un séquenceur (54) fournissant l'identification en écriture ou en lecture ;
- des moyens de regroupement (51), disposés sur le chemin des récurrences reçues en amont du groupe de mémoires et assurant le regroupement d'une récurrence reçue avec une récurrence reçue précédemment et déjà mémorisée, dans le cas où ladite identification de mémoire n'a pas changé.

## Claims

**1.** Method of assigning the received recurrences, corresponding to the video signals received in response to the pulses transmitted by a radar, to visually displayable radials, the recurrences being supplied at a first frequency which is the repetition frequency (PRF) of the radar and accompanied by a first synchronisation signal ($SY_R$) constituted by a first series of pips at the first frequency, and the radials being supplied at a second frequency in synchronism with a second synchronisation signal ($\epsilon$) constituted by a second series of pips at the second frequency;
the method being characterised in that it includes the following steps:
- memory storage of the recurrences at their arrival rate by writing, in one of the memories of a group of m memories, with m ≥ 3, the identification of the memory written to being changed on reception of the first pip ($SY_R$) of the first series following a pip ($\epsilon$) of the second series;
- grouping together a received recurrence with the previously received and already stored recurrence, in the case where the said memory identification has not changed;
- reading of at least one memory of the said group in order to constitute a radial, on reception of each pip ($\epsilon$) of the second series, the identification of the memory read from being obtained from that of the memory written to at the same moment.

**2.** Method according to Claim 1, characterised in that the second frequency ($\epsilon$) is supplied by the rotation angle increment signals from the radar antenna.

**3.** Method according to one of the preceding claims, characterised in that a recurrence is constituted by a series of digital information called quanta, that the said grouping consists in comparing the quanta of the same rank of the two recurrences and in storing the quantum whose value is the highest.

**4.** Method according to one of the preceding claims, characterised in that the memories are numbered from 1 to m, that the identification of the memory written to is constituted by its number and that this number is incremented by one unit on reception of each pip ($SY_R$) of the first series following a pip ($\epsilon$) of the second

series, modulo $m$.

5. Method according to Claim 4, characterised in that the identification of the memory read from is constituted by its number and that this number is obtained by subtracting one unit from the number of the memory written to at the same moment, modulo $m$.

6. Method according to one of the preceding claims, characterised in that the group of memories includes three memories.

7. Method according to Claim 4, characterised in that the group of memories includes four memories, two of them being simultaneously read from, their identification being constituted by their number, the latter being obtained by subtracting respectively one and two units from the number of the memory written to at this moment, modulo 4, the two radials thus obtained making it possible to form a synthetic filling radial.

8. Digital image converter, receiving radar recurrences and supplying visually displayable radials in television mode, including:
    - interface means, receiving the radar recurrences, expressed in polar coordinates;
    - means of conversion of the polar coordinates into cartesian coordinates;
    - memory and remanence means;
    the converter being characterised in that the interface means include, for implementing the method according to one of the preceding claims:
    - a group of $m$ memories ($M_1$, $M_2$, $M_3$), with $m \geq 3$, receiving the recurrences;
    - an address generator (52) for writing into the memories;
    - an addresses generator (53) for reading from the memories;
    - a sequencer (54) supplying the identification in writing or in reading;
    - grouping means (51), arranged on the route of the recurrences received upstream from the group of memories and carrying out grouping of a received recurrence with a previously received and already stored recurrence, in the case where the said memory identification has not changed.

**Patentansprüche**

1. Verfahren, um empfangene Rekurrenzen, die den nach Aussendung von Sendeimpulsen durch ein Radargerät empfangenen Videosignalen entsprechen, den sichtbar zu machenden Radialen zuzuweisen, wobei die Rekurrenzen mit einer ersten Frequenz geliefert werden, die die Wiederholfrequenz (PRF) des Radargeräts ist, und von einem ersten Synchronisationssignal ($SY_R$) begleitet werden, das von einer ersten Folge von Impulsen einer ersten Frequenz gebildet wird, während die Radialen mit einer zweiten Frequenz synchron mit einem zweiten Synchronisationssignal ($\epsilon$) geliefert werden, das von einer zweiten Folge von Impulsen einer zweiten Frequenz gebildet wird, dadurch gekennzeichnet, daß das Verfahren die folgenden Verfahrensschritte enthält:
    - Speicherung der Rekurrenzen im Rhythmus ihres Eintreffens durch Einschreiben in einen der Speicher eine Gruppe von m Speichern, mit $m \geq 3$, wobei die Identifizierung des Speichers im Schreibmodus bei Empfang des ersten Impulses ($SY_R$) der ersten Folge nach einem Impuls ($\epsilon$) der zweiten Folge gewechselt wird;
    - Zusammenfassung einer empfangenen Rekurrenz mit der vorher empfangenen und bereits gespeicherten Rekurrenz, falls die Identifizierung des Speichers nicht verändert wurde;
    - Auslesen mindestens eines Speichers der Gruppe, um eine Radiale zu bilden, bei Empfang jedes Impulses ($\epsilon$) der zweiten Folge, wobei die Identifizierung des Speichers im Lesemodus ausgehend von der des Speichers erhalten wird, der in diesem Augenblick im Schreibmodus ist.

2. Verfahren nach Anspruch 1, dadurch gekennzeichnet, daß die zweite Frequenz ($\epsilon$) von den Winkelinkrementsignalen der Drehung der Radarantenne geliefert wird.

3. Verfahren nach einem der vorhergehenden Ansprüche, dadurch gekennzeichnet, daß eine Rekurrenz durch eine Folge von digitalen Informationen gebildet wird, die Quanten bezeichnet werden, und daß die Zusammenfassung darin besteht, die Quanten gleichen Rangs von zwei Rekurrenzen zu vergleichen und das Quantum mit dem höheren Wert zu speichern.

4. Verfahren nach einem der vorhergehenden Ansprüche, dadurch gekennzeichnet, daß die Speicher von 1 bis m durchnummeriert sind, daß die Identifizierung des Speichers im Schreibzyklus durch dessen Nummer gebildet wird und daß diese Nummer um eine Einheit bei Empfang jedes Impulses ($SY_R$) der ersten Folge nach einem Impuls ($\epsilon$) der zweiten Folge

modulo m inkrementiert wird.

5. Verfahren nach Anspruch 4, dadurch gekennzeichnet, daß die Identifizierung des Speichers im Lesemodus von seiner Nummer gebildet wird und daß diese Nummer erhalten wird, indem man von der Nummer des Speichers im Schreibzyklus im gleichen Augenblick eine Einheit modulo m abzieht.

6. Verfahren nach einem der vorhergehenden Ansprüche, dadurch gekennzeichnet, daß die Speichergruppe 3 Speicher enthält.

7. Verfahren nach Anspruch 4, dadurch gekennzeichnet, daß die Speichergruppe vier Speicher enthält, wobei zwei dieser Speicher gleichzeitig im Lesemodus sind und ihre Identifizierung durch ihre Nummer gebildet wird, und daß diese Nummern erhalten werden, indem man eine bzw. zwei Einheiten modulo vier von der Nummer des in diesem Augenblick im Schreibmodus arbeitenden Speichers abzieht, wobei die beiden so erhaltenen Radialen die Bildung einer fiktiven Füllradiale erlauben.

8. Digitaler Bildtransformator, der Radarrekurrenzen zugeführt erhält und im Fernsehmodus anzeigbar Radiale liefert und enthält
   - Schnittstellenmittel, die in Polarkoordinaten ausgedrückte Radarrekurrenzen empfangen,
   - Mittel zur Umwandlung der Polarkoordinaten in kartesische Koordinaten,
   - Mittel zur Speicherung und für die Remanenz,
   dadurch gekennzeichnet, daß die Schnittstellenmittel für die Durchführung des Verfahrens gemäß einem der vorherigen Ansprüche enthalten:
   - eine Gruppe von m Speichern ($M_1$, $M_2$ und $M_3$), zum Empfang der Rekurrenzen, wobei $m \geq 3$ ist,
   - einen Schreibadressengenerator (52) zum Einschreiben in die Speicher,
   - einen Leseadressenspeicher (53) zum Auslesen aus diesen Speichern,
   - eine Folgeschaltung (54), die die Identifizierung im Schreib- und Lesemodus liefert,
   - Zusammenfassungsmittel (51), die in der Strecke der empfangenen Rekurrenzen vor der Speichergruppe liegen und die Zusammenfassung einer empfangenen Rekurrenz mit einer vorher empfangenen und bereits gespeicherten Rekurrenz bewirken, falls die Identifizierung des Speichers nicht verändert wurde.

FIG.1a

FIG.1b

FIG.1c

FIG.2a

FIG.2b

# FIG.3a

# FIG.3b

FIG. 4

INITIALISATIONS
E = 1
L = 3
DRAPEAU SY$_R$= 1
DRAPEAU E = 1

40

41
RECEPTION D'UN TOP SY$_R$ ?
NON
OUI

42
DRAPEAU SY$_R$=1?
NON
OUI

E = E+1 [3]
ITR = 1
DRAP SY$_R$=0

43

ITR = 0

49

DRAP E =1

44

45
RECEPTION D'UN TOP E ?
NON
OUI

46
DRAPEAU E=1?
NON
OUI

L = E-1 [3]
VLE=1
DRAP E=0

47

VLE = 0

50

DRAP SY$_R$=1

48

EP 0 362 249 B1

FIG.5

FIG.6

EP 0 362 249 B1